# EUROPEAN PATENT SPECIFICATION

(11) **EP 0 485 925 B1**
(45) Date of publication and mention of the grant of the patent: **15.07.1998**
(21) Application number: 91119179.9
(22) Date of filing: 11.11.1991
(51) Int. Cl.: H04M 1/08

(54) **Monolithically integratable switch with low power dissipation for telephone sets and the like**
Monolithisch integrierbarer Schalter mit niedrigem Leistungsverbrauch für Fernsprechapparate und dergleichen
Interrupteur monolithiquement intégrable avec une faible dissipation de puissance pour des postes téléphoniques et similaires

(30) Priority: 15.11.1990 IT 2206290
(43) Date of publication of application: 20.05.1992
(73) Proprietor: SGS-THOMSON MICROELECTRONICS s.r.l., 20041 Agrate Brianza (Milano) (IT)
(72) Inventor: Consiglio, Pietro, I-20141 Milano (IT); Antonini, Carlo, I-21040 Venegono Inferiore (Varese) (IT)
(74) Representative: Modiano, Guido, Dr.-Ing.

(56) References cited:
- DE-A- 2 615 337
- DE-A- 3 623 017
- GB-A- 2 075 305
- US-A- 4 815 126

## Description

The present invention relates to a monolithically integratable switch with low power dissipation particularly for telephone sets and the like.

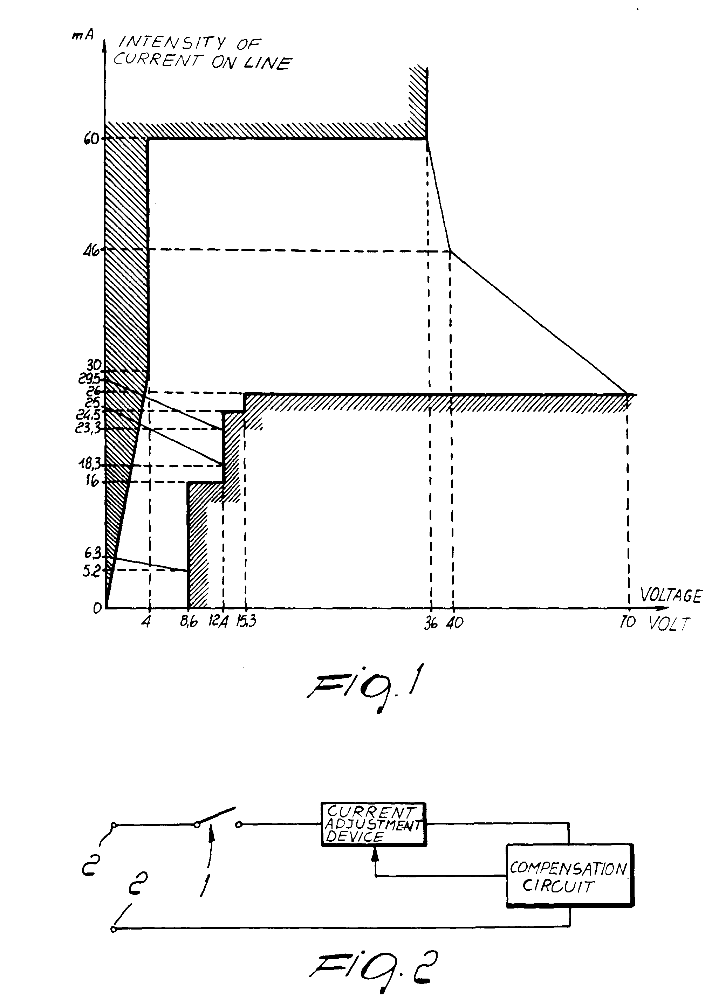

Telephony sets very precise rules regarding to the current and voltage characteristics which must be complied with so that a telephone set can be connected to the telephone line. In particular, some European countries use the chart illustrated in figure 1, in which the non-shaded areas indicate the regions within which the voltage/current characteristic of a telephone set must lie.

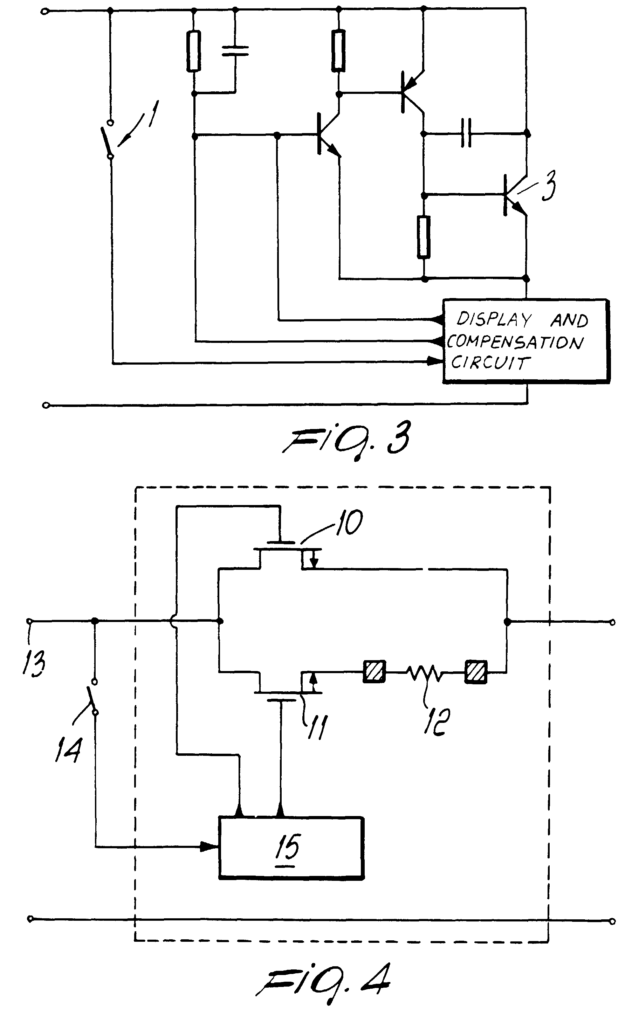

This chart clearly shows that the development of the characteristic between 30 and 60 milliamperes has a different inclination, and it is this development which constitutes the real problem. Said development can be obtained either by using a simple mechanical switch combined with electric circuits, as illustrated in figure 2, or by using discrete-component circuits which provide the mechanical switch as well as the voltage/current characteristic, as illustrated in figure 3.

In the example illustrated in figure 2, the mechanical switch 1 is crossed by the current which flows in the line 2, whereas in figure 3 the mechanical switch 1 is instead crossed by a low current, with considerable improvements in the strength of the mechanical switch and in reliability. In this last case, the switch is used only as an indicator of the state of the telephone and drives a switch 3 which is provided by means of active components. Said switch 3, with the aid of additional circuitry, provides the above mentioned voltage/current characteristic.

The switch 3 usually operates in saturation for low line currents and in a linear manner during current adjustment, and it must therefore be able to dissipate considerable heat, since the power involved is equal to approximately 2.4 watts, i.e. the product of 60 volts of line voltage and 40 milliamperes. This causes a considerable increase in costs, which are related on one hand to the need to manufacture components capable of dissipating said power, possibly using an external dissipator, and on the other hand to the need to provide as many of said components as possible in monolithic form in compliance with the required dissipation.

From DE-A-26 15 337 it is known an integratable switch constituted a a couple of parallel-connected controllable transistors, one of which has a transistor in series thereto. The aim of the invention disclosed in the above-said document is to convert, in a telephone set, the digits dialled by a user in corresponding dialling pulse trains.

The aim of the present invention is to eliminate or substantially reduce the disadvantages described above in known types of execution by providing a monolithically integratable switch with low power dissipation particularly for telephone sets and the like, which significantly reduces the dissipation of energy in the form of heat.

Within the scope of the above aim, an object of the present invention is to provide a switch which integrates almost all of its components on a single substrate, saving silicon surface and thus reducing the manufacturing costs of said integrated circuit.

Not least object of the present invention is to provide a switch which is relatively easy to manufacture and at competitive costs.

This aim, these objects and others which will become apparent hereinafter are achieved by a monolithically integratable switch with low power dissipation particularly for telephone sets and the like, as defined in claim 1. Further characteristics and advantages of the invention will become apparent from the description of a preferred but not exclusive embodiment of a switch according to the invention, illustrated only by way of non-limitative example in the accompanying drawings, wherein:
figure 1 is a diagram of the telephone voltage-current characteristics according to the currently applicable rules (France);
figure 2 is a diagram of a known connection between the line, the telephone switch and the characteristic generator;
figure 3 is another diagram of a known connection between the line, the telephone switch and the characteristic generator;
figure 4 is a circuit diagram showing the reduced-dissipation switch according to the invention;
figure 5 is a circuit diagram showing the means for controlling the switch according to the invention;
figure 6 is a time chart of a current characteristic of the switch according to the invention; and
figure 7 is a time chart of a voltage characteristic of the switch according to the invention.

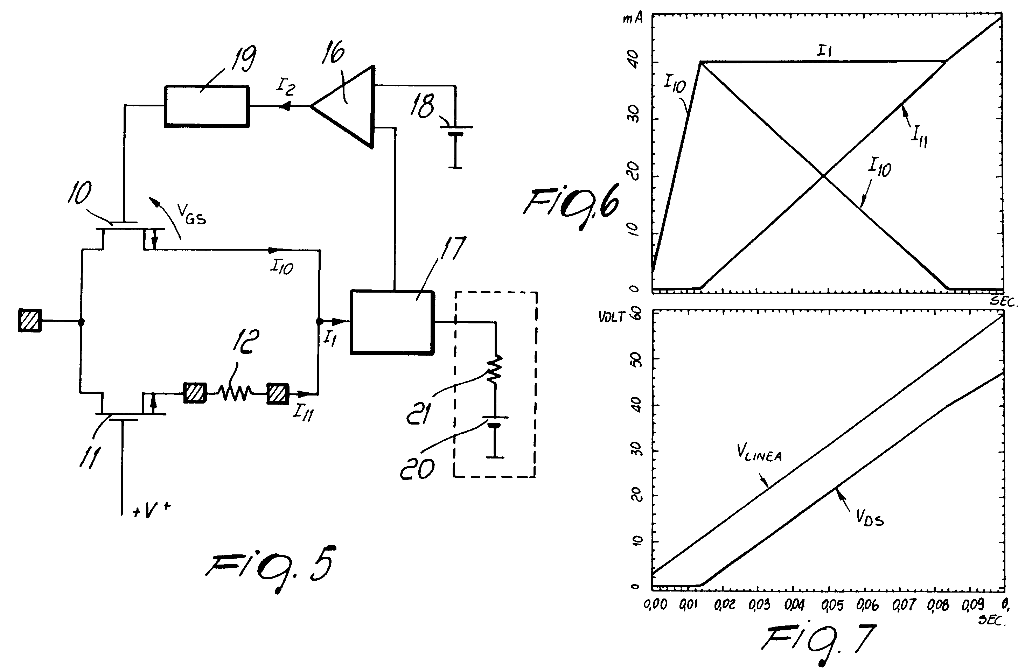

With reference to figures 4 and 5, a switch comprises a first integratable switch which is constituted by a first DMOS transistor 10 which is connected in parallel to a series connection of a second integratable switch, constituted by a second DMOS transistor 11, and a resistor 12. The parallel connection between the described components is arranged on a branch 13 of a telephone line. The transistors 10 and 11 are driven by means 15 for controlling their opening or closure.

The switch furthermore comprises an electric connection which is arranged between the branch 13 of the telephone line and the control means 15; said connection comprises a mechanical switch 14 of a handset.

The first DMOS transistor 10 has its gate terminal connected to the control means 15, its drain terminal connected to a node which is constituted by the branch 13 of the telephone line and by the drain terminal of the second DMOS transistor 11, and its source terminal connected to a terminal of the resistor 12.

The second DMOS transistor 11 has its gate terminal connected to the control means 15, its drain terminal connected to a node which is constituted by the branch 13 of the telephone line and by the drain terminal of the first DMOS transistor 10, and its source terminal connected to a terminal of the resistor 12.

The control means 15 comprise a transconductance amplifier 16 which has a first input terminal, which is connected to a current detector 17 arranged on the branch 13 of the line, downstream of the described switch, and a second input terminal, which is connected to a reference voltage 18 which has a preset value.

The transconductance amplifier 16 has an output terminal for a current signal; said terminal is connected to an input terminal of an adder 19 which is connected, by means of an output terminal, to the gate terminal of said first transistor 10. The adder 19 adjusts a voltage between the gate and source terminals of the first transistor 10 when the output of the current detector 17 has an amplitude greater than the reference voltage 18.

The gate terminal of the second transistor 11 is furthermore kept at a constant and positive voltage with respect to the source terminal, so that it conducts.

In normal operating conditions, the two transistors 10 and 11, which furthermore have low resistance when they conduct, are kept in the linear range (low V_{DS}), and the current flows in practice in the first transistor 10. At a preset value of the line current I, the first transistor 10 is gradually switched off, and accordingly the current which flows in the first transistor 10 tends to decrease while the current which flows in the second transistor 11 tends to increase. The current which flows in the second transistor 11, by passing through the resistor 12, which is external to the integrated circuit, determines an increase in the voltage across the first transistor 10, with a related increase in dissipation.

By appropriately selecting the resistance value of the resistor 12, together with the control of the first transistor 10, it is possible to limit the power dissipated as heat to values of approximately 0.5 watts, which are certainly relatively low but allow easy integration of the switch according to the invention.

The current in the first transistor 10, see figure 6, is limited to 40 milliamperes, and a resistance value equal to R₁₂ = 1 kiloohm has been chosen for the resistor 12 in order to comply with the voltage/current characteristic of the diagram illustrated in figure 1. A series connection of a battery 20 with a resistor 21 has furthermore been inserted in the circuit in order to emulate the use of the telephone. The voltage across the battery 20 is V₂₀ = 2 volts, whereas the resistance of the resistor 21 is R₂₁ = 200 ohms.

When the handset is unhooked, i.e. when the mechanical switch 14 closes, the second transistor 11 is kept in the conducting state by connecting the respective gate terminal to a positive voltage V⁺ with respect to the source terminal. Similarly, the first transistor 10 is in the conducting state. The current detector 17 detects the total current I₁ which flows toward the series connection of the resistor 21 and battery 20, and outputs a voltage V₁ = K₁ ∗ I₁. K₁ is such that a variation of I₁ equal to 1 milliampere produces a ΔV/V₁ equal to 100 millivolts.

The voltage V₁ is compared to the reference voltage 18, which is equal to V₁₈, in order to determine the threshold of control intervention; for the example at issue, V₁₈ = 4 volts. The two above mentioned voltages constitute the inputs to the transconductance amplifier 16, which generates as output a current I₂ which adjusts the gate-source voltage V_{GS} of the first transistor 10. The adder 19 performs the following operation: V_{GS} = V⁺ - K₂I₂, where K₂ is chosen so that when V₁₈ < V₁ one obtains V_{GS} = 0, i.e. the first transistor 10 is off.

As more clearly illustrated in figures 6 and 7, as the line voltage V_{LINE} increases, the current I₁₀ in the first transistor 10 increases until the preset threshold of 40 milliamperes is reached, whereas the current I₁₁ in the second transistor 11 remains at the nil value until the current I₁₀ reaches the threshold value. The drain-source voltage of the second transistor 11 is practically nil, since said second transistor is in the linear range. When the current I₁₀ reaches the threshold value, i.e. 40 milliamperes, the gain of the loop constituted by the blocks 17, 16, 10 and 19 keeps the total current I₁ stable at the threshold value, and any increase in the line voltage V_{LINE} produces an increase in the current I₁₁, i.e. in the current which flows through the resistor 12, a consequent decrease in the current I₁₀ and an increase in the drain-source voltage V_{DS} at the related terminals of the first transistor 10.

The maximum power dissipation in the two DMOS transistors occurs when I₁₀ = I₁₁. When I₁₀ becomes nil, I₁ becomes equal to I₁₁ and all the power is dissipated in the resistor 12.

The choice to use DMOS transistors is advantageous, since on one hand it allows to save space on a silicon substrate and on the other hand said transistors conveniently have a low resistance when they are in the conducting state. The loop constituted by the two transistors furthermore allows a reduced power dissipation, thus allowing easy integration of the switch according to the invention.

The invention thus conceived is susceptible to numerous modifications and variations, all of which are within the scope of the inventive concept. All the details may furthermore be replaced with other technically equivalent elements.

In practice, the materials employed, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A monolithically integratable switch with reduced power dissipation particularly for telephone sets and the like, characterized in that it comprises, on a branch (13) of a telephone line, a first integratable transistor (10) connected in parallel to a second integratable transistor (11), said second integratable transistor (11) being connected in series with a resistor (12), said first and second integratable transistors being driven by control means (15) suitable for closing or opening said transistors (10, 11), said first transistor having its gate terminal connected to said control means (15), its drain terminal connected to a node constituted by said branch (15) and by the drain terminal of said second transistor (11), and its source terminal connected to a further node constituted by said branch (13) and by a first terminal of said resistor (12), and in that said second transistor has its gate terminal connected to said control means (15), its drain terminal connected to a node which is constituted by said branch (13) and by the drain terminal of said first transistor (10), and its source terminal connected to a second terminal of said resistor (12).

2. A monolithically integratable switch according to claim 1, characterized in that each of said first (10) and second (11) integratable transistors is constituted by a respective DMOS transistor.

3. A monolithically integratable switch according to claim 1, characterized in that said control means (15) comprise a transconductance amplifier (16) which has a first input terminal, which is connected to a current detector (17) arranged on said branch (13) of said line, downstream of said switch, and a second input terminal, which is connected to a reference voltage (18), said transconductance amplifier having an output terminal for a current signal which is connected to an input terminal of an adder (19) which is connected, by means of an output terminal, to said gate terminal of said first transistor (10), said adder (19) being suitable for adjusting a voltage between the gate and source terminals of said first transistor (10) when the output of the current detector (17) has a greater amplitude than said reference voltage (18).

## Patentansprüche

1. Monolithisch integrierbarer Schalter mit niedrigem Leistungsverbrauch insbesondere für Fernsprechapparate und dergleichen, dadurch gekennzeichnet, daß er in einem Zweig (13) einer Fernsprechleitung einen ersten integrierbaren Transistor (10) aufweist, der zu einem zweiten integrierbaren Transistor (11) parallelgeschaltet ist, welcher in Reihe zu einem Widerstand (12) geschaltet ist, wobei der erste und der zweite integrierbare Transistor von Steuermitteln (15) angesteuert werden, die geeignet sind, die Transistoren (10, 11) durchzuschalten oder zu sperren, wobei der Gate-Anschluß des ersten Transistors mit den Steuermitteln (15) verbunden ist, sein Drain-Anschluß mit einem von dem Zweig (13) und dem Drain-Anschluß des zweiten Transistors (11) gebildeten Knoten, und sein Source-Anschluß mit einem weiteren von dem Zweig (13) und einem ersten Anschluß des Widerstandes (12) gebildeten Knoten verbunden ist, und dadurch, daß der Gate-Anschluß des zweiten Transistors mit den Steuermitteln (15) verbunden ist, sein Drain-Anschluß mit einem von dem Zweig (13) und dem Drain-Anschluß des ersten Transistors (10) gebildeten Knoten verbunden ist und sein Source-Anschluß mit einem zweiten Anschluß des Widerstandes (12) verbunden ist.

2. Monolithisch integrierbarer Schalter nach Anspruch 1, dadurch gekennzeichnet, daß jeder der ersten (10) und zweiten (11) integrierbaren Transistoren von einem entsprechenden DMOS-Transistor gebildet ist.

3. Monolithisch integrierbarer Schalter nach Anspruch 1, dadurch gekennzeichnet, daß die Steuermittel (15) einen Transkonduktanz-Verstärker (16) umfassen, der einen ersten Eingangsanschluß, welcher an einen in dem Zweig (13) der Leitung stromabwärts des Schalters angeordneten Stromdetektor (17) angeschlossen ist, und einen zweiten Eingangsanschluß aufweist, der an einer Referenzspannung (18) angeschlossen ist, wobei der Transkonduktanz-Verstärker einen Ausgangsanschluß für ein Stromsignal aufweist, der an den Eingangsanschluß eines Addierers (19) angeschlossen ist, der über einen Ausgangsanschluß mit dem Gate-Anschluß des ersten Transistors (10) verbunden und der geeignet ist, eine Spannung zwischen den Gate- und den Source-Anschlüssen des ersten Transistors (10) abzugleichen, wenn der Ausgang des Stromdetektors (17) eine größere Amplitude hat als die Referenzspannung (19).

## Revendications

1. Commutateur intégrable de façon monolithique à consommation réduite, en particulier pour postes téléphoniques et analogue, caractérisé en ce qu'il comprend, sur une branche (13) d'une ligne téléphonique, un premier transistor intégrable (10) connecté en parallèle avec un second transistor intégrable (11), le second transistor intégrable (11) étant connecté en série avec une résistance (12), les premier et second transistors intégrables étant pilotés par un moyen de commande (15) propre à fermer ou à ouvrir les transistors (10, 11), le premier transistor ayant sa borne de grille connectée au moyen de commande (15), sa borne de drain connectée à un noeud constitué par la branche (13) et par la borne de drain du second transistor (11), et sa borne de source connectée à un autre noeud constitué par la branche (13) par une première borne de la résistance (12), et en ce que le second transistor a sa borne de grille connectée au moyen de commande (15), sa borne de drain connectée à un noeud qui est constitué par la branche (13) et par la borne de drain du premier transistor (10), et sa borne de source connectée à une seconde borne de la résistance (12)

2. Commutateur intégrable de façon monolithique selon la revendication 1, caractérisé en ce que chacun des premier (10) et second (11) transistors intégrables est constitué d'un transistor DMOS respectif.

3. Commutateur intégrable de façon monolithique selon la revendication 1, caractérisé en ce que le moyen de commande (15) comprend un amplificateur à transconductance (16) qui a une première borne d'entrée connectée à un détecteur de courant (17) agencé sur la branche (13) de ladite ligne, en aval du commutateur, et une seconde borne d'entrée connectée à une tension de référence (18), l'amplificateur à transconductance ayant une borne de sortie pour un signal de courant qui est connectée à une borne d'entrée d'un additionneur (19) qui est connecté, par une borne de sortie, à la borne de grille du premier transistor (10), l'additionneur (19) étant propre à régler une tension entre les bornes de grille et de source du premier transistor (10) quand la sortie du détecteur de courant (17) a une amplitude plus grande que la tension de référence (18).
